# FASCICULE DE BREVET EUROPEEN

(11) **EP 1 004 417 B1**
(45) Date de publication et mention de la délivrance du brevet: **24.03.2004**
(21) Numéro de dépôt: 98402964.5
(22) Date de dépôt: 27.11.1998
(51) Int. Cl.: B29C 33/56, B29C 33/38

(54) **Procédé de fabrication de moules à peau remplaçables (coquilles) par moulage par transfert de résine (RTM)**
Verfahren zur Herstellung von Formwerkzeugen mit auswechselbarer Schale durch Transfer-Spritzen von Harz (RTM-Verfahren)
Method for making moulds with replaceable skin (shell) by resin transfer molding (RTM)

(43) Date de publication de la demande: 31.05.2000
(73) Titulaire: Stratime Cappello Systèmes, 02600 Villers Cotterets (FR)
(72) Inventeur: Capello, Lucio, 77100 Nauteuil les Meaux (FR)

(56) Documents cités:
- EP-A- 0 642 904
- WO-A-83/03792
- GB-A- 2 243 107
- GB-A- 2 310 162
- US-A- 4 671 837

## Description

La présente invention concerne un procédé de réalisation de moules avec coquilles duplicables et remplaçables pour la fabrication de pièces en matériaux composites.

La transformation des matériaux composites à base de résines de synthèse et de fibres de renfort est réalisée habituellement selon 3 familles de procédés :
■ manuels (contact ou projection simultanée)
   Ce sont des fabrications à froid sans pression, avec moule simple (1 seule face) dont les caractéristiques principales sont :
   - niveau d'investissement très faible
   - cadence de production très lente

   Ces procédés sont utilisés pour des productions unitaires ou pour des très petites séries (10 à 200 pièces).
■ très industrialisés (SMC-BMC)
   Ce sont des fabrications à chaud sous haute pression avec moules fermés (2 faces) dont les caractéristiques principales sont :
   - niveau d'investissement très élevé
   - cadence de production très rapide

   Ces procédés sont utilisés pour des productions en grandes séries (supérieures à 10000 pièces).
■ moyennement industrialisés (injection basse pression/RTM injection vide, compression à froid)
   Ce sont des fabrications à froid, moules fermés (2 faces) dont les caractéristiques principales sont :
   - niveau d'investissement moyen
   - cadence de production moyenne

Ces procédés étaient utilisés pour des productions entre quelques centaines jusqu'à quelques milliers de pièces. La limite supérieure de quelques milliers était due au fait que les moules utilisés sont réalisés eux-mêmes en matériaux composites et que leur surface se détériore après un, voire quelques milliers de pièces.

Les moules sont normalement constitués de deux parties : une
- partie femelle (matrice) et une partie mâle (poinçon) qui délimitent, une fois fermées l'une contre l'autre le volume de la pièce à réaliser.

Les outillages Composites sont réalisés selon le principe suivant /.

Sur un modèle plein représentant la forme extérieure de la pièce à réaliser, on vient construire par stratification manuelle (Résine de synthèse et fibre de renfort) une enveloppe composite de 30 à 40 mm d'épaisseur. Cette empreinte négative est ensuite renforcée d'une armature métallique qui est liée par collage ou stratification de façon solidaire à l'empreinte négative stratifiée. Cet ensemble constitue une matrice.

Dans cette matrice, on construit de façon provisoire une pièce fictive à l'aide de cire calibrée ou de bois. Sur cette pièce fictive restée dans la matrice, on vient, de façon identique à la construction précédente, construire une empreinte composite qui sera renforcée d'une armature métallique. Cette construction constitue un poinçon.

On libère la matrice de la pièce fictive et on obtient un ensemble poinçon-matrice.

La détérioration des outillages composites se caractérise par des fissures, des éclats, ce qui conduit à rebuter le moule, car les pièces produites n'ont plus l'aspect de surface désiré, alors que seule la peau intérieure du moule est détériorée (c'est elle qui est en contact avec la pièce moulée et qui donne l'aspect de la pièce produite).

Le restant du moule, ossature, forme générale, équipement périphérique étant encore parfaitement utilisable.

Dans le procédé RTM traditionnel, une fois le moule fermé sur les renforts en fibres, la résine liquide, mélangée au catalyseur est injectée.

Ce n'est qu'après un temps de durcissement (polymérisation) entre 3 et 4 fois la durée d'injection que la pièce suffisamment rigide peut être démoulée. Les documents GB 2243107 et WO 83/03792 décrivent des techniques permettant de réaliser des coquilles, soit de façon manuelle, soit en prenant comme référentiel le modèle de base de la pièce à réaliser .

Selon l'invention, le procédé de la revendication 1 permet de remédier aux inconvénients précités et d'utiliser la même technologie, les mêmes équipements pour réaliser des pièces et les surfaces travaillantes des moules (coquilles).

Il consiste à réaliser des moules en matériaux composites, mais dont la peau intérieure est indépendante du reste du moule, et peut donc être remplacée.

Le procédé selon la présente invention permet de réaliser les coquilles par RTM entre la matrice composite et un poinçon composite spécifique ou poinçon d'injection coquille.

On garnit la matrice de renfort (fibre de verre ou carbone). Ces renforts sont secs et sans résine. On positionne le poinçon spécifique ou poinçon d'injection coquille en regard de la matrice garnie et on assemble le tout.

La matrice et le poinçon spécifique assemblés préservent un vide en interface qui représente le volume d'une coquille et qui est à présent rempli de fibre sèche. On injecte alors à l'aide d'une machine d'injection RTM (machine utilisée en production) une résine de synthèse à l'intérieur de l'ensemble matrice-poinçon spécifique.

Après durcissement, on obtient un élément solide qui est une coquille de moulage. En répétant l'opération, on peut obtenir un nombre non limité de coquilles de moulage.

Pour la production de pièces, on garnit de fibre sèche la ou les coquilles que l'on positionne dans la matrice composite, on vient mettre en regard le poinçon composite d'injection de pièce, on assemble le tout et on injecte une résine de synthèse. Après polymérisation et démoulage du solide obtenu, on obtient une pièce extraite de la coquille.

L'aspect industriel et la répétitivité du procédé est donc garanti par la présence dans ce dispositif du poinçon d'injection de coquilles et du poinçon d'injection de pièces qui s'accouplent l'un et l'autre parfaitement à la même matrice.

Dans le procédé, selon l'invention, la peau de la matrice, ou celle du poinçon, ou les deux sont des coquilles indépendantes qui sont réalisées séparément par injection RTM avec le même équipement que pour les pièces de production. Les dessins présentés en annexe illustrent l'invention :

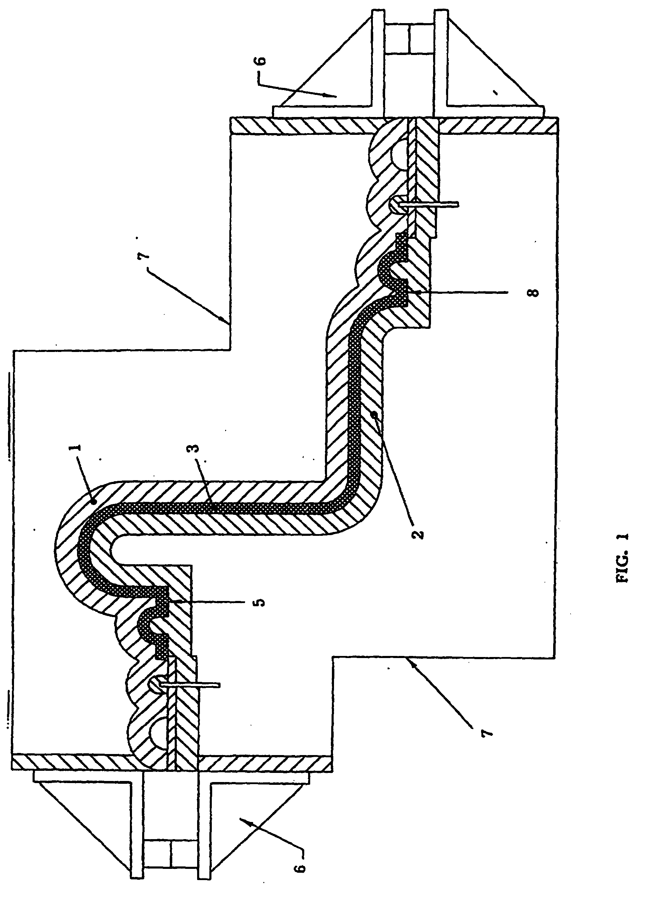

La figure 1 représente en coupe la première phase qui est la réalisation des coquilles.

En référence à ce dessin, la matrice (1) est fixée avec un premier poinçon spécifique (2) pour la réalisation par injection RTM des coquilles.

La surface finale du moule matrice (matrice + coquille) est réalisée.

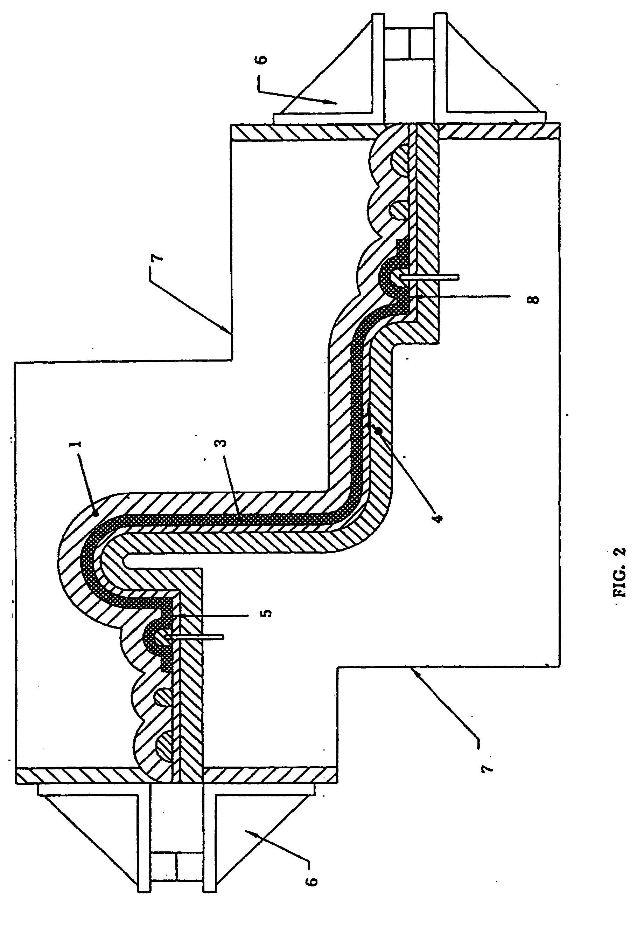

La figure 2 représente en coupe, la seconde phase qui est la production en série des pièces moulées.

En référence à ce dessin, la matrice (1) est la même que celle ayant servie pour la réalisation des coquilles, une de celles-ci étant placée dessus (3).

Sur cette matrice (1) avec coquille (3) vient se fixer un second poinçon (4) pour la réalisation par injection RTM des pièces moulées.

La différence entre le poinçon (2) pour injection des coquilles et le poinçon (4) pour injection des pièces est la place représentant la pièce à mouler.

Selon une autre variante non illustrée, des coquilles sont réalisées aussi bien sur la matrice que sur le poinçon, dans ce cas, on utilise 2 matrices et 2 poinçons.

Le procédé, selon l'invention, permet :
- une durée de vie des moules beaucoup plus longue (par le remplacement des coquilles)
- l'utilisation de la même technologie pour réaliser coquille (surface travaillante du moule) et pièce de série.
- une augmentation importante des cadences de production, les pièces pouvant être démoulées avec la coquille beaucoup plus tôt, lorsqu'elles ne sont pas encore suffisamment rigides pour pouvoir être démoulées seules (sans la coquille) donc par duplication des coquilles par la technologie du RTM et l'utilisation de la matrice (1) et du poinçon (2), on créera un parc de coquilles qui autorisera une rotation des coquilles (surface travaillante) rapide.

Et donc une augmentation des possibilités du RTM, permettant d'utiliser cette technique pour produire des séries entre quelques milliers jusqu'à une dizaine de milliers tout en conservant un très bel état de surface, ce qui n'était pas réalisable avec les moules traditionnels.

Le procédé selon l'invention est particulièrement destiné à la production de pièces moulées en matériaux composites par injection RTM dans la plasturgie.

### Nomenclature utilisée dans les figures :

- 1 -: Matrice
- 2 -: Poinçon injection coquille
- 3 -: Coquille
- 4 -: Poinçon injection pièce
- 5 -: Buse d'injection
- 6 -: Serrage
- 7 -: Armature métallique
- 8 -: 2 buses d'évent

## Revendications

1. Procédé de réalisation de moules comprenant une matrice (1) et un poinçon (4) d'injection des pièces pour la fabrication de pièces en matériaux composites dans lequel une au moins de ces parties (1,4) à une peau (3) constituée par une coquille amovible, remplaçable, réalisée par RTM en utilisant la dite partie (1,4) et un poinçon (2) d'injection des coquilles.

2. Procédé selon la revendication 1 **caractérisé en ce que** la matrice et le poinçon d'injection des pièces sont réalisés en matériaux composites.

3. Procédé selon l'une des revendications précédentes dans lequel le poinçon (2) d'injection des coquilles est différent du poinçon (4) d'injection des pièces.

## Claims

1. Procedure for making moulds with a matrix (1) and a punch (4) for injection of parts for the making of parts in composite materials, in which at least one of these parts (1, 4) to a skin (3) constituted by a removable and replaceable shell, made by RTM using the said part (1, 4) and a shell injection punch (2).

2. Procedure according to claim 1 **characterized by** the matrix and the part injection punch being made of composite materials.

3. Procedure according to one of the previous claims in which the shell injection punch (2) is different from the part injection punch (4).

## Patentansprüche

1. Verfahren zur Anfertigung von Gießformen bestehend aus einer Matrize (1) und einem Stempel (4) zur Teileinspritzung für die Herstellung von Teilen aus Verbundwerkstoffen in welchem mindestens eines dieser Teile (1, 4) über eine Haut (3) aus einem beweglichen, austauschbaren, im RTM-Verfahren unter Verwendung des genannten Teils (1,4) hergestellten Formkasten und einem Formkasteneinspritzstempel (2) besteht.

2. Verfahren gemäß dem Patentanspruch 1, welches sich dadurch auszeichnet, dass die Matrize und der Teileinspitzstempel aus Verbundstoffen hergestellt werden.

3. Verfahren gemäß einer der beiden vorangehenden Patentansprüche, in welchem der Formkasteneinspritzstempel (2) vom Teileinspritzstempel (4) verschieden ist.
